# EUROPEAN PATENT APPLICATION

(11) **EP 0 570 054 A1**
(43) Date of publication of application: **18.11.1993**
(21) Application number: 93201277.6
(22) Date of filing: 05.05.1993
(51) Int. Cl.: A01D 34/70

(54) **Engine bonnet for lawn mower tractors, made in several parts coupled by means of snap hooks**

(30) Priority: 11.05.1992 IT MI920467 U
(71) Applicant: CASTELGARDEN S.P.A., I-31033 Castelfranco Veneto (Treviso ) (IT)
(72) Inventor: Ferrari, Maurizio, I-20144 Milano (IT)
(74) Representative: Mittler, Enrico

(57) **Abstract**

An engine bonnet (4) for lawn mower tractors (1) which is made in at least two parts (8 and 9) assembled by snap hook means (10 and 15).

## Description

The present invention relates to an engine bonnet for lawn mower tractors which is made in several parts coupled by means of snap hooks.

A lawn mower tractor is notoriously an appliance used for mowing large grassy surfaces. As described, for example, in the Italian patent application MI91A 002135, filed on July 31, 1991, lawn mower tractors are known which comprise a frame mounted on steering and driving wheels, an engine covered by a bonnet, a system for transmitting motion from the engine to the driving wheels, a cutting plate fitted with rotary blades, a conveyor for ejecting the cut grass and a container for collection thereof.

In known lawn mower tractors the engine bonnet is made in several parts assembled by techniques which depend on the material used in the manufacture of the parts themselves. In particular use is currently made of steel sheet bonnets whose parts are assembled by welding and screws, bonnets in vacuum-formed plastic or glass reinforced plastic whose parts are assembled by means of rivets and screws and finally injection-moulded plastic bonnets whose parts are assembled by means of special welding methods and screws or, alternatively, by using special clips and screws.

The manufacture of engine bonnets for lawn mower tractors by means of the assembly techniques described above is somewhat expensive, and more particularly, in the specific case of welding plastic, extremely complex and costly machines and equipment are required.

The object of the present invention is to reduce the costs of assembly considerably, as well as the number of components handled, at the same time maintaining optimum joining reliability.

In accordance with the invention this object is achieved by means of an engine bonnet composed of at least two parts, characterised in that said parts are coupled by means of a plurality of snap hook means.

It is clear that in this way, simple, rapid and above all much less expensive assembly is achieved compared to the solutions used previously.

With the present invention, moreover, the advantages of the known technique of production in several parts are not lost, such as for example the possibility of obtaining engine bonnets which are attractive (both as regards colour range and shape) but above all the appreciable reduction in volumes during moulding, transport and storage.

The features and advantages of the present invention are illustrated in greater detail hereinunder with reference to an embodiment, represented by way of a non-limiting example in the accompanying drawings, in which:
Fig. 1 shows a lawn mower tractor fitted with an engine bonnet according to the invention in a schematic side view;
Fig. 2 shows a plan of said tractor from above;
Fig. 3 shows the enlarged detail of the engine bonnet in axial section;
Fig. 4 shows the engine bonnet as seen from the inside in horizontal section;
Fig. 5 shows a section view of said engine bonnet sectioned along the outline plane V-V of Fig. 4;
Fig. 6 shows a section view of said engine bonnet sectioned along the outline plane VI-VI in Fig. 4;
Figs. 7 and 8, finally, show one of the possible snap coupling means in a partially sectioned side view and in section along the outline plane VIII-VIII of figure 7.

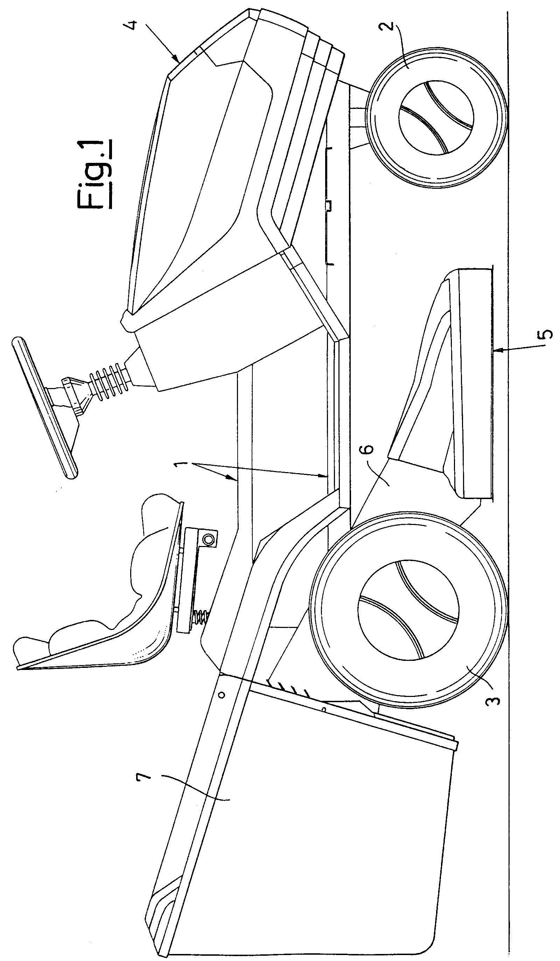

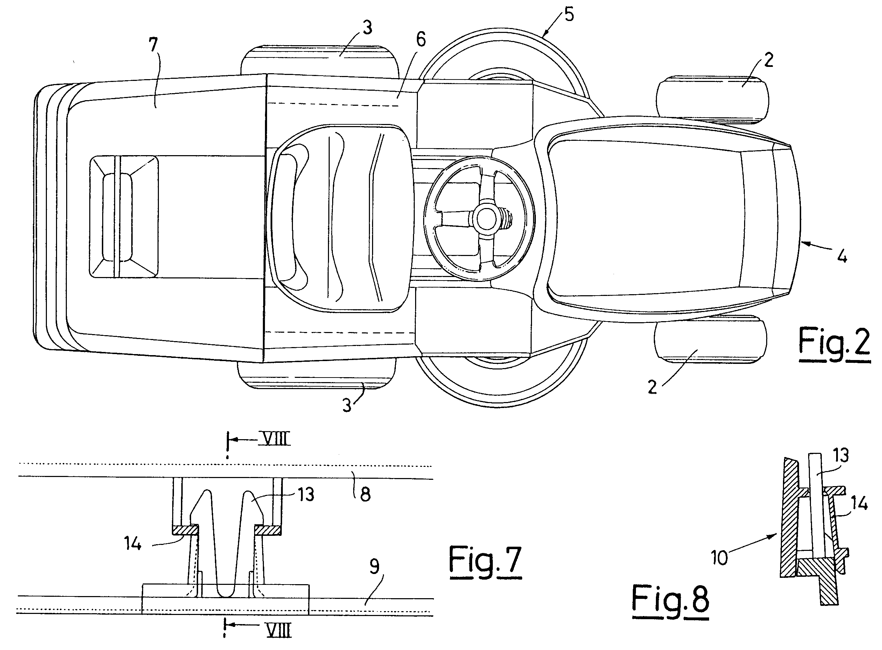

Figures 1 and 2 show a lawn mower tractor for the maintenance of grassy surfaces, composed of a frame 1 mounted on two steering wheels 2 and two wheels 3 driven by an engine (not shown in the figure) mounted on the frame 1 and protected by a covering bonnet 4, a pair of cutting blades (not shown) mounted rotatably inside a cutting plate 5, a conveyor 6 for the cut grass and a container 7 for collecting the grass, placed at the outlet of the conveyor 6.

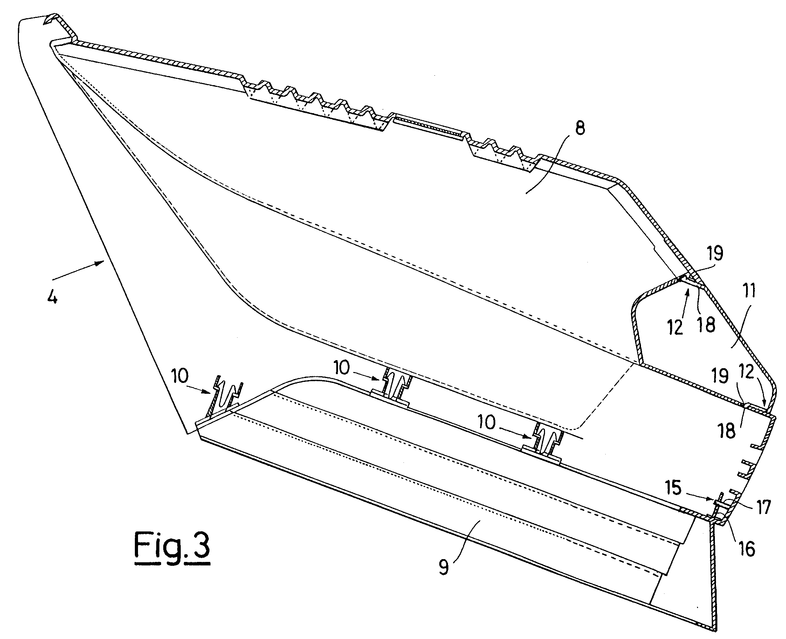

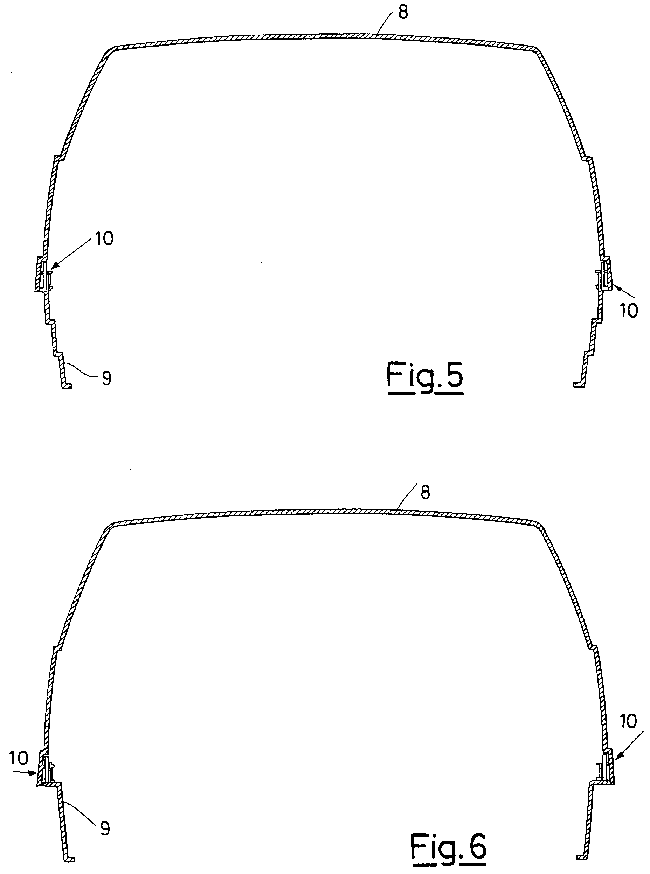

As shown better in figures 3 to 7, the bonnet 4 essentially consists of an upper part 8 and a lower part 9, joined by snap assembly means denoted as a whole by 10 and 15. The bonnet also has a front grille 11, also assembled by the proposed methods by means of hooks 12.

A specific example of snap hooking means 10 is illustrated in an enlarged view in Figures 7 and 8, where 13 and 14 denote the lower and upper parts of the hook proposed, consisting respectively of a flexible fork and a box casing defining a housing and hooking space for the abovementioned fork.

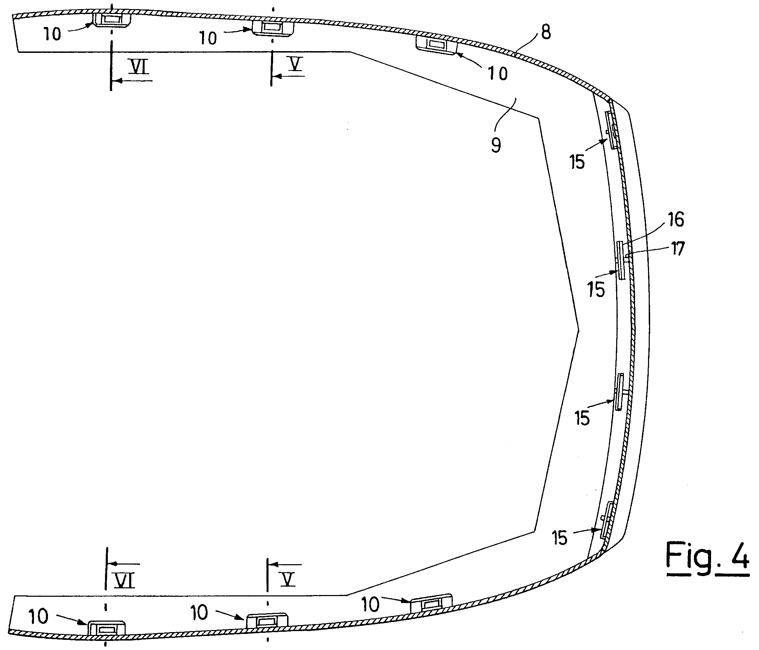

An example form of hooking means 15 can in turn be seen in Figures 3 and 4 and provides for the presence of a flexible fork 17 integral with the upper part 8 of the bonnet and a perforated support 16 integral with the lower part 9 and defining a housing and hooking space for the fork 17.

An example form of hooking means 12 can in turn be seen in Fig. 3 and provides for the presence of hook-shaped elements 18 integral with the grille 11 and corresponding hooking spaces 19 in the upper part 8 of the bonnet.

## Claims

1. Engine bonnet for lawn mower tractors consisting of at least two parts (8 and 9), characterised in that said parts are coupled by a plurality of snap hooking means (10, 15 and 12).

2. Engine bonnet according to claim 1, characterised in that it comprises a first lower part (9), a second upper part (8) coupled to the first by first and second snap hooking means (10 and 15) and a third front part (11) coupled to said second part by third snap hooking means (12).

3. Engine bonnet according to claim 1, characterised in that said first snap hooking means (10) are arranged laterally between the lower part (9) and the upper part (8) and consist of two separate parts (13 and 14), integral with the lower part (9) and with the upper part (8) respectively of the engine bonnet and composed respectively of a flexible fork (13) and of a box casing (14) defining a space for housing and hooking the abovementioned fork.

4. Engine bonnet according to claim 1, characterised in that said second snap hooking means (15) are arranged frontally between the upper part (8) and the lower part (9) and are composed of two separate parts (17 and 16), integral with the upper part (8) and the lower part (9) respectively of the engine bonnet (4), composed respectively of a flexible fork (17) and of a perforated support (16) defining a space for housing and hooking the abovementioned fork.

5. Engine bonnet according to claim 1, characterised in that said third hooking means (12) between the upper part (8) and the front part (11) consist of hook-shaped parts (18) integral with the front part (11) and respective housing and hooking spaces (19) located in the upper part (8).
